# FASCICULE DE BREVET EUROPEEN

(11) **EP 3 601 440 B1**
(45) Date de publication et mention de la délivrance du brevet: **27.04.2022**
(21) Numéro de dépôt: 18711145.5
(22) Date de dépôt: 21.03.2018
(51) Int. Cl.: C09C 3/06, C09C 1/00, C09C 1/04, C09C 1/24, C09C 1/34, C09C 1/36

(54) **MATÉRIAU COMPOSITE COLORÉ**
GEFÄRBTES VERBUNDMATERIAL
COLOURED COMPOSITE MATERIAL

(30) Priorité: 22.03.2017 CH 3702017
(43) Date de publication de la demande: 05.02.2020
(73) Titulaire: Hublot S.A., Genève, 1204 Genève (CH)
(72) Inventeur: BUTTET, Mathias, 1125 Monnaz (CH); BIANCO, Luca, 1010 Lausanne (CH); RECALCATI, Sébastien, 1006 Lausanne (CH)
(74) Mandataire: Plasseraud IP
(86) Numéro de dépôt international: PCT/EP2018/057208
(87) Numéro de publication internationale: WO 2018/172428

(56) Documents cités:
- EP-B1- 0 455 933
- EP-B1- 0 830 429
- WO-A1-03/076525
- WO-A1-2016/113422

## Description

### DOMAINE DE L'INVENTION

La présente invention concerne les matériaux composites colorés, notamment céramiques (notamment les matériaux composites céramique - céramique colorée), leur procédé de fabrication et leurs utilisations.

### ARRIERE-PLAN DE L'INVENTION

Les céramiques de couleur produites industriellement sont en général des oxydes d'aluminium (alumine) ou des oxydes de zirconium chargés et mélangés à un pigment. Un pigment est une substance colorante insoluble dans le milieu qu'elle colore. En particulier, les pigments sont utilisés pour colorer un matériau dans la masse.

Dans certains cas, les oxydes peuvent également être colorés directement par la création de défauts, tels que des atomes différents, dans la structure cristalline.

La production de composants en céramique colorée est maîtrisée pour certaines couleurs telles que le noir, le blanc, le bleu et le vert, mais pas pour toutes les couleurs.

Par exemple, malgré tous les efforts fournis, il n'a encore jamais été possible de produire de la céramique de couleur rouge vif. Il existe uniquement des déclinaisons de céramique rouge/orange ou rouge/brun.

En effet, le procédé habituel de fabrication des céramiques colorées consiste à mélanger la céramique en poudre avec un pigment minéral puis à injecter l'ensemble dans des moules pour obtenir ce que l'on appelle un « corps vert » lié par un polymère. Ce corps vert est ensuite délianté, par exemple par chauffage à 600°C, le liant polymère étant alors sublimé. Le corps vert est finalement fritté à une température proche de la température de fusion de la céramique, provoquant ainsi sa densification et l'obtention d'une pièce solide.

Le taux de pigment utilisé varie en fonction de la couleur souhaitée, mais en général quelques pourcents volumiques, typiquement de l'ordre de 3% à 5%, sont suffisants pour colorer la céramique. En effet, pendant la phase de frittage, le pigment va en général diffuser dans la céramique qui est blanche et qui va ainsi prendre la couleur du pigment.

Cependant, lorsque le pigment ne diffuse pas dans la céramique, celle-ci apparaît blanche, ce qui diminue la puissance du pigment ajouté. Les couleurs ainsi obtenues sont en général pales et sans grand intérêt esthétique.

En particulier, il n'existe pas de pigment de couleur rouge qui puisse maintenir sa couleur après l'étape de frittage. Les couleurs obtenues tirent plutôt sur l'orange, le bordeaux, voire le brun.

La présente invention a notamment pour but de proposer de nouveaux matériaux composites colorés permettant d'élargir significativement la gamme de couleurs possibles.

### OBJETS DE L'INVENTION

A cet effet, l'invention a pour objet un matériau composite solide fritté combinant :
- un pigment minéral sous forme de particules discrètes comprenant chacune un noyau coloré et un revêtement entourant le noyau, ledit revêtement étant adapté pour laisser passer la lumière ; et
- une matrice à base d'oxyde métallique ou de métalloïde, ladite matrice étant adaptée pour laisser passer la lumière,
dans lequel le revêtement des particules de pigment est adapté pour éviter des interactions entre les noyaux colorés lors du frittage.

Grâce à ces dispositions, il est possible d'obtenir des matériaux composites céramiques avec une palette de couleurs très large, comprenant notamment des céramiques de couleur rouge vif. On peut obtenir une couleur prédéterminée souhaitée en, mélangeant des particules de pigment ayant des noyaux de couleurs différentes, par exemple rouge, vert, bleu, éventuellement noir et blanc (ou rouge, jaune, bleu, éventuellement noir et blanc). La matrice, qui est adaptée pour laisser passer la lumière c'est-à-dire qu'elle est transparente ou translucide, permet de laisser la couleur du pigment diffuser vers l'extérieur du matériau même si la particule de pigment est située en profondeur dans la matrice. Ceci a pour effet d'augmenter la surface de pigmentation du matériau et donc d'augmenter l'intensité de sa couleur.

Le revêtement des particules de pigment permet d'éviter des interactions entre les noyaux colorés, notamment lors du frittage. Ces interactions rendraient aléatoire le résultat (notamment la couleur finale). Le revêtement des particules de pigment permet notamment de mélanger des particules de pigment ayant des noyaux colorés de différents types, tout en évitant de telles interactions entre les noyaux. On peut ainsi obtenir des couleurs différentes, selon le mélange choisi, tout en conservant sensiblement le même procédé de réalisation du matériau composite quelque soit la couleur choisie.

Dans divers modes de réalisation du matériau composite selon l'invention, on peut avantageusement avoir recours en outre à l'une et/ou à l'autre des dispositions suivantes :
- toutes les particules du pigment minéral ont un revêtement identique ;
- le pigment minéral comprend un mélange de particules ayant respectivement des noyaux d'au moins deux types différents, notamment de couleurs différentes ;
- le pigment minéral représente une fraction volumique comprise entre 2% et 50% dudit matériau composite ;
- le noyau d'au moins une particule du pigment minéral est à base d'aluminate de cobalt CoAl₂O₄ ;
- le noyau d'au moins une particule du pigment minéral est un oxyde comprenant au moins un élément choisi parmi le fer, le chrome, l'aluminium, le titane, le silicium, le zinc, le nickel, le cobalt, le cadmium, le cuivre, le vanadium, le bismuth, le nobium et le manganèse ;
- le revêtement d'au moins une particule du pigment minéral est fabriqué à partir d'un matériau choisi parmi le mica, l'alumine, la zircone et le dioxyde de titane ;
- les particules de pigment minéral présentent un diamètre moyen compris entre 0,2 µm et 10 µm (ou entre 0,2 µm et 15 µm) ;
- la matrice est une céramique, en ce sens qu'elle est constituée d'oxydes métalliques ;
- la matrice est à base de spinelle d'aluminate de magnésium MgAl₂O_{4 ;}
- la matrice comprend un verre ;
- les particules discrètes de pigment minéral forment un mélange de plusieurs types de particules discrètes ayant respectivement des noyaux colorés de couleurs différentes.

Par ailleurs, l'invention a également pour objet un procédé pour fabriquer un matériau composite tel que décrit ci-dessus, ledit procédé comportant les étapes suivantes :
a) sélection d'un pigment minéral sous forme de particules discrètes comprenant chacune un noyau coloré et un revêtement entourant le noyau, ledit revêtement étant adapté pour laisser passer la lumière ;
b) mélange du pigment minéral sous forme de poudre avec la matrice sous forme de poudre ; et
c) frittage dudit mélange de poudres,
dans lequel le revêtement des particules de pigment est adapté pour éviter des interactions entre les noyaux colorés lors du frittage.

Dans divers modes de réalisation du procédé selon l'invention, on peut avantageusement avoir recours en outre à l'une et/ou à l'autre des dispositions suivantes :
- toutes les -particules du pigment minéral ont un revêtement identique ;
- on réalise un matériau composite de couleur donnée et au cours de l'étape a), détermine à partir de la couleur donnée des proportions de particules de pigment minéral choisies parmi plusieurs types prédéterminés ayant respectivement plusieurs couleurs de base, et on mélange les particules de pigment minéral selon les proportions définies ;
- lesdites couleurs de base comprennent le rouge, le vert et le bleu (ou le rouge, le jaune et le bleu);
- lesdites couleurs de base comprennent en outre le noir et le blanc.

Enfin, l'invention a en outre pour objet une utilisation d'un matériau composite tel que défini précédemment, en horlogerie ou joaillerie.

### BREVE DESCRIPTION DES DESSINS

L'invention sera mieux comprise à la lecture de la description qui va suivre de plusieurs de ses modes de réalisation, donnés uniquement à titre d'exemples non limitatifs en se référant aux dessins joint, sur lesquels :
- la figure 1 est une illustration schématique d'un exemple de procédé de fabrication d'un matériau composite selon un mode de réalisation de l'invention,
- et la figure 2 est un chronogramme du procédé illustré à la figure 1.

### DESCRIPTION PLUS DETAILLEE

Comme expliqué ci-dessus, l'invention concerne un matériau composite solide, fritté, destiné à être utilisé notamment en horlogerie ou joaillerie, ledit matériau combinant :
- un pigment minéral ; et
- une matrice à base d'oxyde métallique ou de métalloïde, la matrice étant adaptée pour laisser passer la lumière (c'est-à-dire qu'elle est transparente ou translucide).

Le pigment minéral peut représenter une fraction volumique comprise entre 2% et 50% du matériau composite.

Le pigment minéral est sous forme de particules discrètes comprenant chacune un noyau coloré et un revêtement entourant le noyau, ledit revêtement étant adapté pour laisser passer la lumière (c'est-à-dire qu'il est transparent ou translucide).

Le noyau du pigment minéral est choisi en fonction de la couleur souhaitée pour le matériau composite.

Pour le bleu et le vert, on choisit un noyau de pigment minéral à base d'aluminium et de cobalt, en particulier l'aluminate de cobalt CoAl₂O₄ ayant la structure cristalline spinelle. La couleur bleue ou verte du pigment et l'intensité de la couleur du pigment dépendent de son taux d'oxydation.

Mis à part l'aluminate de cobalt, il est également possible d'utiliser les composés ayant les formules chimiques suivantes, la couleur bleue ou verte ainsi que l'intensité de la couleur dépendant également du taux d'oxydation :
- (Co,Zn)Al₂O₄ ;
- (Zn,Co)(Cr,Al)₂O₄ ;
- Co(Al,Cr)₂O₄ ;
- CoAl₂O₄/Co₂SnO₄.

En fonction de la couleur souhaitée pour le matériau composite, un élément ou une combinaison d'éléments peut être ajoutée pour modifier la couleur du composé. Parmi ces éléments, on trouve notamment le chrome, le lithium, le magnésium, le silicium, le strontium, l'étain, le titane et le zinc. Là encore, la couleur bleue ou verte et l'intensité de la couleur du pigment dépendent de son taux d'oxydation.

Pour le rouge et le jaune, le noyau coloré peut être un oxyde comprenant du fer, du chrome, de l'aluminium, du titane, du silicium, du zinc, du nickel, du cobalt, du cadmium, du cuivre, du vanadium, du bismuth et/ou du manganèse. Par exemple, il peut s'agir notamment :
- de KAl₂ (AlSi₃O₁₀)(OH)₂ ;
- du TiO₂ ;
- du SiO₂ ;
- du ZnO.

Des exemples de pigments rouges avec une base d'oxyde de titane et de mica sont donnés dans les documents suivants : US 4 344 987 A, US 5 522 923 A, et US 4 086 100 A.

Le revêtement du pigment minéral peut être fabriqué à partir d'un matériau choisi parmi :
- le mica, par exemple la muscovite ou la biotite ;
- l'alumine Al₂O₃ ;
- la zircone ZrO₂ ;
- le dioxyde de titane TiO₂.

Les particules de pigment minéral peuvent présenter un diamètre moyen compris entre 0,2 µm et 10 µm.

Avantageusement, la température de détérioration du pigment minéral est supérieure à 1300°C. Cette température correspond à la température de décomposition du pigment minéral qui entraîne un changement de couleur de celui-ci, ou autrement dit à la température à laquelle la couleur du pigment minéral est altérée.

La matrice est choisie de telle sorte que sa température de densification sous pression, sous une pression généralement inférieure à 250 MPa, soit inférieure à la température de détérioration du pigment minéral, donc avantageusement inférieure à 1300°C. On peut ainsi fritter le matériau sous pression, à une température de frittage supérieure ou égale à la température de densification à ladite pression et inférieure à ladite température de détérioration du pigment minéral.

La matrice est adaptée pour laisser passer la lumière, c'est-à-dire qu'elle est transparente ou translucide. Pour cela, la matrice est par exemple préparée suivant des procédés connus pour les céramiques transparentes. Cette adaptation réside alors en particulier dans le choix de l'oxyde et dans les conditions de mise en forme, c'est-à-dire la température de densification et la pression.

Comme vu précédemment, la matrice est à base d'oxyde métallique ou d'oxyde de métalloïde.

Le concept de métalloïde se rapporte à un élément chimique qui ne peut être classé ni dans les métaux ni parmi les non-métaux, c'est-à-dire dont les propriétés physiques et chimiques sont intermédiaires entre celles d'un métal et d'un non-métal.

Les métalloïdes sont caractérisés par les propriétés suivantes :
- leurs oxydes sont généralement amphotères (ceux des métaux sont plutôt basiques et ceux des non-métaux plutôt acides) ;
- ils se comportent comme des semi-conducteurs (notamment le bore, le silicium et le germanium).

Les métalloïdes forment donc une bande oblique dans le tableau périodique entre les métaux et les non-métaux :
- Bore ₅B
- Silicium ₁₄Si
- Germanium ₃₂Ge
- Arsenic ₃₃As
- Antimoine ₅₁Sb
- Tellure ₅₂Te
- Astate ₈₅At

En particulier, la matrice peut être une céramique ou comprendre de la silice, notamment un verre.

Parmi les matrices céramiques utilisables dans le cadre de la présente invention, on peut trouver le spinelle d'aluminate de magnésium (MgAl₂O₄), la zircone ou l'alumine pure, le mica, la zircone stabilisée à l'yttrium, le dioxyde de titane

Parmi les matrices comportant du verre utilisables dans le cadre de la présente invention, on peut trouver :
- des silicates dont la température de transition vitreuse est proche de 600°C ;
- des borosilicates, tel que le Pyrex^{®} dont la température de transition vitreuse est de 850°C ;
- des verres typiquement utilisés dans la fabrication des émaux.

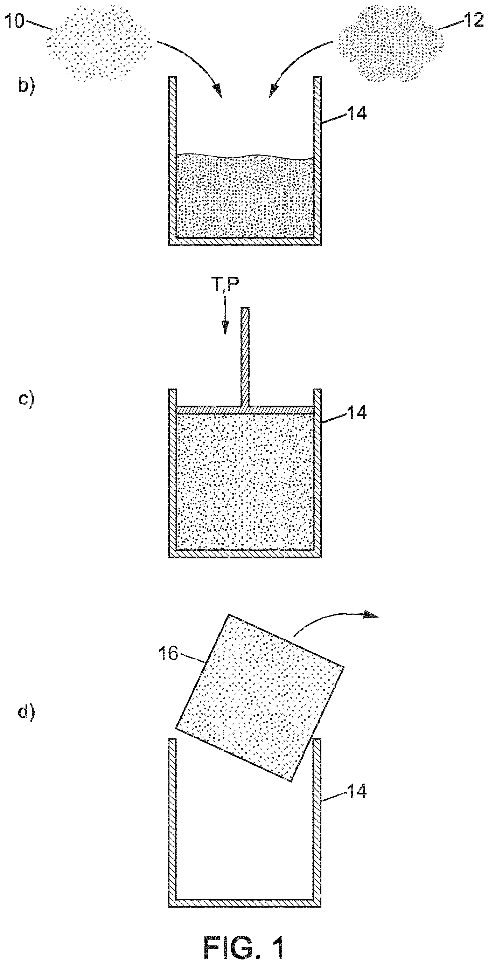

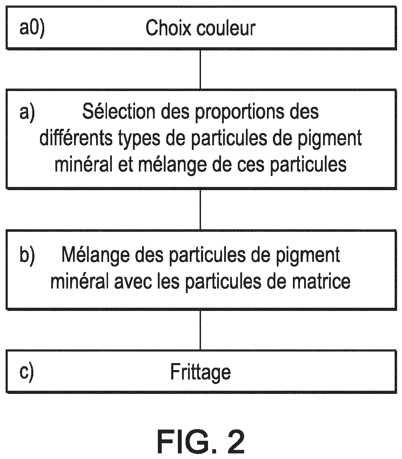

On peut fabriquer un matériau composite selon l'invention notamment par le procédé illustré sur les figures 1 et 2 et comprenant les étapes suivantes :
a0) choix de la couleur souhaitée,
a) sélection des proportions des différents types de particules de pigment minéral pour obtenir la couleur souhaitée et mélange de ces particules
b) mélange du pigment minéral 10 sous forme de poudre avec la matrice 12 sous forme de poudre dans un moule 14 ;
c) frittage du mélange de poudres sous une pression suffisante pour que la température de densification de la matrice 12 sous cette pression reste inférieure à la température de détérioration du pigment minéral 10, le frittage étant fait à une température de frittage supérieure ou égale à la température de densification à ladite pression et inférieure à ladite température de détérioration du pigment minéral ;
d) retrait du matériau composite 16 du moule 14.

Ainsi, sous la pression et la chaleur, le pigment minéral est stable tandis que la matrice enrobe toutes les particules du pigment minéral.

Le frittage du mélange de poudre s'effectue avantageusement sous une pression supérieure à 80 MPa.

Le frittage peut être réalisé par exemple sous pression uniaxiale à l'aide d'une presse SPS (« Spark Plasma Sintering ») dans laquelle la montée en température peut être effectuée en quelques minutes.

Il est également possible de terminer le frittage par frittage sous pression isostatique. Il s'agit dans un premier temps de presser le mélange de poudres pour en former des pastilles ou d'injecter des composants par une technique classique d'injection des céramiques, puis d'effectuer un premier frittage dont l'effet est de fermer les porosités sans forcément terminer le procédé. Le frittage est alors finalisé dans un four qui peut être pressurisé sous gaz jusqu'à 200 MPa en général.

### Exemple 1

On utilise comme matrice une poudre de spinelle d'aluminate de magnésium (MgAl₂O₄) ayant une taille de particules de 0,2 µm avec comme impuretés moins de 10 ppm de Fe, Ca, Na, et moins de 20 ppm de Si, par exemple celle produite par la société Baikowski sous la référence S30 CR.

Le dosage de pigment minéral peut varier de 5% à 30% en volume.

Le frittage du spinelle MgAl₂O₄ est généralement opéré à une température supérieure à 1800°C. Selon l'invention, afin de préserver le pigment minéral et conserver son intensité, le frittage est effectué à environ 1200°C, sous très haute pression, isostatique ou uniaxiale.

La densification du spinelle MgAl₂O₄ est possible dans cette zone de température, à condition que la pression soit supérieure à 100 MPa.

De plus, cette zone de température permet d'utiliser une large gamme de pigments sans les détériorer.

On obtient ainsi un matériau composite céramique dense avec une transparence qui permette d'utiliser la coloration du pigment minéral sur une profondeur de quelques dixièmes de millimètres, au lieu d'avoir uniquement l'effet de couleur par les particules de pigment en surface.

En particulier, on mélange 32,76 g de spinelle MgAl₂O₄ (S30 CR de Baikowski) avec 4,6 g de pigment rouge (revêtement de TiO₂ sur un noyau de KAl₂(AlSi₃O₁₀)(OH)₂) pour obtenir un mélange avec 10% de pigment en volume. On remplit un moule en graphite de 30 mm de diamètre avec 4 g du mélange. On fritte le mélange sous pression pendant 5 min dans une presse SPS à 1200°C avec une force de 70 kN correspondant à une pression de 100 MPa. On obtient un disque de céramique dense de couleur rouge vif.

### Exemple 2

On utilise comme matrice de la zircone stabilisée à l'yttrium qui, après frittage à 1200°C sous une pression supérieure à 200 MPa, isostatique ou uniaxiale, peut mener à l'obtention d'une zircone transparente ou translucide.

Ainsi, en mélangeant jusqu'à 30% en volume de pigment rouge (par exemple le pigment de l'exemple 1) avec une zircone stabilisée à l'yttrium (ajout d'yttrium à hauteur de 8%), on obtient un effet similaire à celui obtenu avec le verre ou le spinelle MgAl₂O₄, c'est-à-dire une matrice transparente avec des pigments rouge emprisonnés à l'intérieur.

Ainsi, par sa transparence/translucidité, la matrice garantit une couleur vive du matériau final ainsi qu'une surface maximale de pigments balayés par la lumière rentrante et traversante.

L'invention propose donc de nouveaux matériaux composites céramiques avec une très large gamme de couleurs.

En particulier, pour réaliser un matériau composite de couleur donnée, on peut effectuer la sélection et le mélange de l'étape a) en utilisant un nombre limité de types prédéterminés de particules de pigment minéral, les différents types de particules ayant respectivement des noyaux présentant différentes couleurs de base, dans des proportions adaptées pour obtenir ladite couleur donnée. Ce mélange de particules ayant des noyaux de différents types est rendu possible, sans interaction entre noyaux pendant le frittage, par le fait que le noyau de chaque particule de pigment minéral est entouré d'un revêtement. Il peut être spécialement avantageux que les particules des différents types aient des revêtements identiques.

Avec une installation relativement simple, on peut ainsi obtenir une très large gamme de couleurs. En particulier, on peut utiliser trois types prédéterminés de particules de pigment minéral dont les noyaux ont respectivement trois couleurs de base, notamment rouge, vert et bleu (ou rouge, jaune, bleu). Eventuellement, on peut utiliser cinq types prédéterminés de particules de pigment minéral dont les noyaux ont respectivement cinq couleurs de base, notamment rouge, vert, bleu, noir et blanc (ou rouge, jaune, bleu, noir et blanc). Les deux derniers types (noir et blanc) permettent de moduler l'intensité par exemple pour obtenir des teintes pastel.

Les matériaux composites colorés de la présente invention trouvent leur application dans la fabrication, par exemple, des composants d'habillage des pièces horlogères, tel que les lunettes, les carrures, les boucles de bracelets, etc. L'avantage de ces matériaux dans cette application est leur résistance à l'usure et la garantie que la couleur des composants ne pourra pas être abimée par les contraintes imposées à la montre portée au poignet.

## Revendications

1. Matériau composite solide (16) fritté combinant
- un pigment minéral (10) sous forme de particules discrètes comprenant chacune un noyau coloré et un revêtement entourant le noyau, ledit revêtement étant adapté pour laisser passer la lumière ; et
- une matrice (12) à base d'oxyde métallique ou de métalloïde, ladite matrice (12) étant adaptée pour laisser passer la lumière,
dans lequel le revêtement des particules de pigment est adapté pour éviter des interactions entre les noyaux colorés lors du frittage.

2. Matériau composite solide (16) selon la revendication 1, dans lequel toutes les particules du pigment minéral ont un revêtement identique.

3. Matériau composite solide (16) selon la revendication 1 ou la revendication 2, dans lequel le pigment minéral comprend un mélange de particules ayant respectivement des noyaux d'au moins deux types différents, notamment de couleurs différentes.

4. Matériau composite solide (16) selon l'une quelconque des revendications précédentes, dans lequel le pigment minéral (10) représente une fraction volumique comprise entre 2% et 50% dudit matériau composite (16).

5. Matériau composite solide (16) selon l'une quelconque des revendications précédentes, dans lequel le noyau d'au moins une particule du pigment minéral (10) est à base d'aluminate de cobalt CoAl₂O₄.

6. Matériau composite solide (16) selon l'une quelconque des revendications 1 à 4, dans lequel le noyau d'au moins une particule du pigment minéral (10) est un oxyde au moins un élément choisi parmi le fer, le chrome, l'aluminium, le titane, le silicium, le zinc, le nickel, le cobalt, le cadmium, le cuivre, le vanadium, le bismuth, le nobium et le manganèse.

7. Matériau composite solide (16) selon l'une quelconque des revendications précédentes, dans lequel le revêtement d'au moins une particule du pigment minéral (10) est fabriqué à partir d'un matériau choisi parmi le mica, l'alumine, la zircone et le dioxyde de titane.

8. Matériau composite solide (16) selon l'une quelconque des revendications précédentes, dans lequel les particules de pigment minéral (10) présentent un diamètre moyen compris entre 0,2 µm et 10 µm.

9. Matériau composite solide (16) selon l'une quelconque des revendications 1 à 7, dans lequel les particules de pigment minéral (10) présentent un diamètre moyen compris entre 0,2 µm et 15 µm.

10. Matériau composite solide (16) selon l'une quelconque des revendications précédentes, dans lequel la matrice (12) est une céramique.

11. Matériau composite (16) selon l'une quelconque des revendications 1 à 9, dans lequel la matrice (12) comprend un verre.

12. Procédé pour fabriquer un matériau composite solide (16) selon l'une quelconque des revendications précédentes, ledit procédé comportant les étapes suivantes :
a) sélection d'un pigment minéral (10) sous forme de particules discrètes comprenant chacune un noyau coloré et un revêtement entourant le noyau, ledit revêtement étant adapté pour laisser passer la lumière ;
b) mélange du pigment minéral (10) sous forme de poudre avec la matrice (12) sous forme de poudre ; et
c) frittage dudit mélange de poudres,
dans lequel le revêtement des particules de pigment est adapté pour éviter des interactions entre les noyaux colorés lors du frittage.

13. Procédé selon la revendication 12, dans lequel toutes les particules du pigment minéral (10) ont un revêtement identique.

14. Procédé selon la revendication 12 ou la revendication 13, pour réaliser un matériau composite de couleur donnée, dans lequel au cours de l'étape a), on détermine à partir de la couleur donnée des proportions de particules de pigment minéral choisies parmi plusieurs types prédéterminés ayant respectivement plusieurs couleurs de base, et on mélange les particules de pigment minéral selon les proportions définies.

15. Procédé selon la revendication 14, dans lequel lesdites couleurs de base comprennent le rouge, le vert et le bleu.

16. Procédé selon la revendication 14, dans lequel lesdites couleurs de base comprennent le rouge, le jaune et le bleu.

17. Procédé selon la revendication 15 ou la revendication 16, dans lequel lesdites couleurs de base comprennent en outre le noir et le blanc.

18. Utilisation d'un matériau composite (16) selon l'une quelconque des revendications 1 à 11 en horlogerie ou joaillerie.

## Patentansprüche

1. Gesintertes Festkörper-Verbundmaterial (16), das kombiniert:
- ein Mineralpigment (10) in Form von diskreten Partikeln mit jeweils einem gefärbten Kern und einer den Kern umgebenden Hülle, wobei die Hülle angepasst ist, um Licht durchzulassen; und
- eine Matrix (12) auf Metalloxidbasis oder Metalloidbasis, wobei die Matrix (12) angepasst ist, um Licht durchzulassen,
in welchem die Hülle der Pigmentpartikel angepasst ist, um beim Sintern Wechselwirkungen zwischen den gefärbten Kernen zu verhindern.

2. Festkörper-Verbundmaterial (16) nach Anspruch 1, in welchem alle Partikel des Mineralpigments eine gleichartige Hülle haben.

3. Festkörper-Verbundmaterial (16) nach Anspruch 1 oder Anspruch 2, in welchem das Mineralpigment ein Gemisch aus Partikeln mit mindestens zwei unterschiedlichen Typen von Kernen, insbesondere unterschiedlichen Farben, aufweist.

4. Festkörper-Verbundmaterial (16) nach einem der vorstehenden Ansprüche, in welchem das Mineralpigment (10) einen Volumenanteil zwischen 2% und 50% des Verbundmaterials (16) darstellt.

5. Festkörper-Verbundmaterial (16) nach einem der vorstehenden Ansprüche, in welchem der Kern mindestens eines Partikels des Mineralpigments (10) auf Basis von Kobaltaluminat CoAl₂O₄ ist.

6. Festkörper-Verbundmaterial (16) nach einem der Ansprüche 1 bis 4, in welchem der Kern mindestens eines Partikels des Mineralpigments (10) ein Oxid mindestens eines Elements ist, das ausgewählt ist aus: Eisen, Chrom, Aluminium, Titan, Silizium, Zink, Nickel, Kobalt, Cadmium, Kupfer, Vanadium, Wismut, Niob und Mangan.

7. Festkörper-Verbundmaterial (16) nach einem der vorstehenden Ansprüche, in welchem die Hülle mindestens eines Partikels des Mineralpigments (10) aus einem Material hergestellt ist, das aus Glimmer, Tonerde, Zirkon und Titandioxid ausgewählt ist.

8. Festkörper-Verbundmaterial (16) nach einem der vorstehenden Ansprüche, in welchem die Mineralpigment-Partikel (10) einen mittleren Durchmesser zwischen 0,2µm und 10µm haben.

9. Festkörper-Verbundmaterial (16) nach einem der Ansprüche 1 bis 7, in welchem die Mineralpigment-Partikel (10) einen mittleren Durchmesser zwischen 0,2µm und 15µm haben.

10. Festkörper-Verbundmaterial (16) nach einem der vorstehenden Ansprüche, in welchem die Matrix (12) eine Keramik ist.

11. Festkörper-Verbundmaterial (16) nach einem der Ansprüche 1 bis 9, in welchem die Matrix (12) ein Glas aufweist.

12. Verfahren zur Herstellung eines Festkörper-Verbundmaterials (16) nach einem der vorstehenden Ansprüche, wobei das Verfahren die folgenden Schritte aufweist:
a) Auswählen eines Mineralpigments (10) in Form von diskreten Partikeln, die jeweils einen gefärbten Kern und eine den Kern umgebende Hülle aufweisen, wobei die Hülle angepasst ist, um Licht durchzulassen;
b) Mischen des Mineralpigments (10) in Form von Pulver mit der Matrix (12) in Form von Pulver; und
c) Sintern des Pulvergemisches,
in welchem die Hülle der Pigmentpartikel angepasst ist, um beim Sintern Wechselwirkungen zwischen den gefärbten Kernen zu verhindern.

13. Verfahren nach Anspruch 12, in welchem alle Partikel des Mineralpigments (10) eine gleichartige Hülle haben.

14. Verfahren nach Anspruch 12 oder Anspruch 13, in welchem zur Herstellung eines Verbundmaterials einer gegebenen Farbe man im Verlaufe des Schritts a) ausgehend von der gegebenen Farbe Verhältnisse bestimmt, in denen Mineralpigmentpartikel aus mehreren vorgegebenen Typen mit jeweils verschiedenen Basisfarben auszuwählen sind, und man die Mineralpigmentpartikel gemäß den definierten Verhältnissen mischt.

15. Verfahren nach Anspruch 14, in welchem die Basisfarben rot, grün und blau aufweisen.

16. Verfahren nach Anspruch 14, in welchem die Basisfarben rot, gelb und blau aufweisen.

17. Verfahren nach Anspruch 15 oder Anspruch 16, in welchem die Basisfarben außerdem schwarz und weiß aufweisen.

18. Verwendung eines Verbundmaterials (16) nach einem der Ansprüche 1 bis 11 in der Uhrenproduktion oder Schmuckproduktion.

## Claims

1. Sintered solid composite material (16) combining
- a mineral pigment (10) in the form of discrete particles each comprising a coloured core and a coating surrounding the core, said coating being adapted for allowing light to pass; and
- a matrix (12) based on metal oxide or metalloid oxide, said matrix (12) being adapted for allowing light to pass,
wherein the coating of the pigment particles is adapted for avoiding interactions between the coloured cores during sintering.

2. Solid composite material (16) according to claim 1, wherein all the particles of the mineral pigment have an identical coating.

3. Solid composite material (16) according to claim 1 or claim 2, wherein the mineral pigment comprises a mixture of particles having respectively cores of at least two different types, in particular with different colours.

4. Solid composite material (16) according to any one of the preceding claims, wherein the mineral pigment (10) represents a fraction by volume of between 2 % and 50 % of said composite material (16).

5. Solid composite material (16) according to any one of the preceding claims, wherein the core of at least one particle of the mineral pigment (10) is based on cobalt aluminate CoAl₂O₄.

6. Solid composite material (16) according to any one of claims 1 to 4, wherein the core of at least one particle of the mineral pigment (10) is an oxide at least one element selected from iron, chromium, aluminium, titanium, silicon, zinc, nickel, cobalt, cadmium, copper, vanadium, bismuth, niobium and manganese.

7. Solid composite material (16) according to any one of the preceding claims, wherein the coating of at least particle of the mineral pigment (10) is manufactured from a material selected from mica, alumina, zirconium and titanium dioxide.

8. Solid composite material (16) according to any one of the preceding claims, wherein the particles of mineral pigment (10) have a mean diameter of between 0.2 µm and 10 µm.

9. Solid composite material (16) according to any one of claims 1 to 7, wherein the particles of mineral pigment (10) have a mean diameter of between 0.2 µm and 15 µm.

10. Solid composite material (16) according to any one of the preceding claims, wherein the matrix (12) is a ceramic.

11. Composite material (16) according to any one of claims 1 to 9, wherein the matrix (12) comprises a glass.

12. Method for manufacturing a solid composite material (16) according to any one of the preceding claims, said method including the following steps:
a) selecting a mineral pigment (10) in the form of discrete particles each comprising a coloured core and a coating surrounding the core, said coating being adapted for allowing light to pass;
b) mixing the mineral pigment (10) in the form of powder with the matrix (12) in the form of powder; and
c) sintering said mixture of powders,
wherein the coating of the pigment particles is adapted for avoiding interactions between the coloured cores during sintering.

13. Method according to claim 12, wherein all the particles of the mineral pigment (10) have an identical coating.

14. Method according to claim 12 or claim 13, for producing a composite material with a given colour, wherein, during step a), proportions of particles of mineral pigment selected from a plurality of predetermined types having respectively a plurality of basic colours are determined from the given colour, and the particles of mineral pigment are mixed in the defined proportions.

15. Method according to claim 14, wherein said basic colours comprise red, green and blue.

16. Method according to claim 14, wherein said basic colours comprise red, yellow and blue.

17. Method according to claim 15 or claim 16, wherein said basic colours furthermore comprise black and white.

18. Use of a composite material (16) according to any one of claims 1 to 11 in timepieces or jewellery.
